# EUROPEAN PATENT APPLICATION

(11) **EP 4 685 403 A1**
(43) Date of publication of application: **28.01.2026**
(21) Application number: 25191333.1
(22) Date of filing: 23.07.2025
(51) Int. Cl.: F24C 15/00, A47J 27/04, A47J 37/06, F24C 15/32

(54) **A MULTIFUNCTIONAL COOKING APPARATUS**

(30) Priority: 23.07.2024 MY PI2024004284
(71) Applicant: Cape EMS Manufacturing (M) SDN BHD, 81400 Senai Johor (MY)
(72) Inventor: TAN, Juan Boon, 81750 Masai Johor (MY); WU, Edmund, 80400 Johor Bahru Johor (MY)
(74) Representative: Papula Oy

(57) **Abstract**

The present invention discloses a multifunctional cooking apparatus comprising a main body having a lower compartment (101) with a chamber for receiving food products therein; and an upper (102) compartment comprising a dispensing module (103) for containing liquid to produce steam; a conductive receptacle (104) for receiving liquid from the dispensing module (103) for conversion into steam for steam cooking; a heating element (105a, 105b) for heating the conductive receptacle (104) for boiling the received liquid to produce steam thereon; and a circulation system in communication with the lower compartment (101); wherein the dispensing module (103) comprises a plurality of flavour enhancing liquid dispensers (106) for controlled egress of the flavour enhancing liquid onto the conductive receptacle (104), such that the steam produced from the conductive receptacle (104) is subsequently circulated through the circulation system into the chamber in the lower compartment (101).

## Description

### FIELD OF INVENTION

The present invention relates to a multifunctional cooking apparatus. More particularly, the present invention relates to a multifunctional cooking apparatus having one or more sources for heating or thermal conductivity added with superheated steaming capabilities.

### BACKGROUND OF THE INVENTION

Air fryers and multifunctional cookers have become popular kitchen appliances in recent years, offering a healthier alternative to deep-frying. Air fryers rely on rapid air circulation technology where a heating element at its top generates heat, while a powerful fan circulates the hot air around the food, mimicking the crispiness of deep-frying with significantly less oil. In recent years, some manufacturers have introduced air fryers with steaming capabilities, where they would have separate water reservoirs and a steamer tray. However, most air fryer designs prioritize air circulation for efficient frying, which can limit the amount of steam produced, making it less effective for true steaming applications compared to dedicated steamers. Additionally, due to the design focused on air circulation, uneven steaming throughout the cooking chamber may cause unevenly cooked food.

Many technologies have been implemented to improve on such multifunctional cooking apparatus. One such example is a Chinese patent with publication no. CN114766926A which discloses an air fryer comprising an air fryer body which includes a frying basket, a reflecting cover, head conduction fan blades, an electric heating pipe, and a fan power assembly. The heating cavity is defined by the frying basket and the reflecting cover, and the heat conduction fan blades and the electric heating pipe are arranged at the top of the heating cavity. An upper guide is arranged at the top of the reflection cover, the whole heat conduction fan blades and the whole electric heating pipe are of a big-end-down horn-shaped structure, with an air guide structure being used for guiding air obliquely downwards into an inner cavity of the frying basket arranged on the side wall of the frying basket, and a lower guide part is arranged in the middle of the bottom of the frying basket.

Another Chinese patent with publication no. CN217488362U discloses an air fryer with a liquid spraying function, comprising an air fryer body and a plurality of liquid spraying components, each liquid spraying component comprises a liquid storage cavity for storing liquid to be sprayed, a liquid pump, a nozzle, a liquid inlet pipe and a liquid outlet pipe, in which one end of the liquid inlet pipe communicates with the liquid pump. The other end of the liquid inlet pipe communicates with the output end of the liquid pump, and the other end of the liquid outlet pipe communicates with the nozzle.

Yet another Chinese patent with publication no. CN215383383U discloses a food material baking and frying atomization water replenishing device comprising a water box, a water pump, and an atomization spray head which are sequentially connected through a water guide pipe, and the device is used for atomizing water in the water box and outputting the atomized water to a food material baking and frying space. The atomized water is output at a proper time under control of an electric control system, and the atomized water is sprayed on the surfaces of the food materials.

A technology as disclosed in a United States patent with publication no. US11647862B2 recites a steam-type air fryer, including an air outlet structure, including a body shell, the body shell is provided therein with a cooking cavity, a steam generator in the body shell generates hot steam which is introduced into the cooking cavity, such that the cooking cavity is provided with an air outlet hole for discharging residual steam. A cold wind passage into which external cold air enters is thereby formed between the cooking cavity and the body shell. The air fryer further comprises a water inlet structure, which includes an air fryer main body, an upper end of the air fryer main body provided with a water tank seat, in which the water tank seat is detachably provided with a water tank, wherein the water tank is provided therein with a water outlet seat extending upward, and the water tank seat is provided with a water outlet pipe corresponding to the water outlet seat.

### SUMMARY OF INVENTION

An object of the present invention is to provide a multifunctional cooking apparatus that maintains the integrity of the food being cooked. It is also an object of the present invention to provide a multifunctional cooking apparatus capable of cooking food in various modes. Besides that, another object of the present invention is to provide a multifunctional cooking apparatus that has self-cleaning capabilities.

In one aspect of the present invention, there is provided a multifunctional cooking apparatus comprising a main body having a lower compartment with a chamber for receiving food products therein; and an upper compartment comprising a dispensing module for containing liquid to produce steam; a conductive receptacle for receiving liquid from the dispensing module for conversion into steam for steam cooking; a heating element for heating the conductive receptacle for boiling the received liquid thereon to produce steam; and a circulation system in communication with the lower compartment; wherein the dispensing module comprises a plurality of flavour enhancing liquid dispensers for controlled egress of the flavour enhancing liquid onto the conductive receptacle, such that the vapour produced from the conductive receptacle is subsequently circulated through the circulation system into the chamber in the lower compartment.

Preferably, the dispensing module is configured to selectively dispense any one of the flavour enhancing liquid dispensers.

Preferably, the dispensing module includes an inlet for filling up any one of the flavour enhancing liquid dispensers.

Preferably, the heating element is arranged at any position in either or both the upper compartment or in the lower compartment.

Preferably, the heating element includes a resistive heating element and an induction heating element.

Preferably, the circulation system includes a fan assembly.

Preferably, the fan assembly is arranged in a position between the dispensing module and the conductive receptacle.

Preferably, the fan assembly facilitates a flow of the steam produced in the conductive receptacle produced in the conductive receptacle into the chamber of the lower compartment thereafter.

Preferably, the apparatus further comprises a controller module integrated into the upper compartment, in which the controller module is configured to control all operations of the apparatus.

Preferably, the dispensing module and the conductive receptacle are removable from either or both the lower compartment and the upper compartment.

One skilled in the art will readily appreciate that the present invention is well adapted to carry out the objects and obtain the ends and advantages mentioned, as well as those inherent therein. The embodiment described herein is not intended as limitations on the scope of the invention.

### BRIEF DESCRIPTION OF THE DRAWINGS

For the purpose of facilitating an understanding of the invention, there is illustrated in the accompanying drawing the preferred embodiments from an inspection of which when considered in connection with the following description, the invention, its construction and operation and many of its advantages would be readily understood and appreciated.
**FIG. 1** is an isometric view illustrating a preferred embodiment of a multifunctional cooking apparatus.
**FIG. 2** is a cross-sectional front view illustrating a preferred embodiment of the multifunctional cooking apparatus.
**FIG. 3** is an isometric view illustrating an exemplary embodiment of the multifunctional cooking apparatus having an induction heating element.
**FIG. 4** is a cross-sectional view illustrating the exemplary embodiment of the multifunctional cooking apparatus having the induction heating element.
**FIG. 5** is an isometric view illustrating an exemplary embodiment of the multifunctional cooking apparatus with two heating elements.
**FIG. 6** is a cross-sectional view illustrating the exemplary embodiment of the multifunctional cooking apparatus with two heating elements.
**FIG. 7** is an isometric view illustrating another exemplary embodiment of the multifunctional cooking apparatus.
**FIG. 8** is a cross-sectional view illustrating the another exemplary embodiment of the multifunctional cooking apparatus.

### DETAILED DESCRIPTION OF THE INVENTION

Hereinafter, the invention shall be described according to the preferred embodiments of the present invention and by referring to the accompanying description and drawings. However, it is to be understood that limiting the description to the preferred embodiments of the invention is merely to facilitate discussion of the present invention and it is envisioned that those skilled in the art may devise various modifications without departing from the scope of the appended claim.

The invention will now be described in greater detail, by way of example, with reference to the drawings.

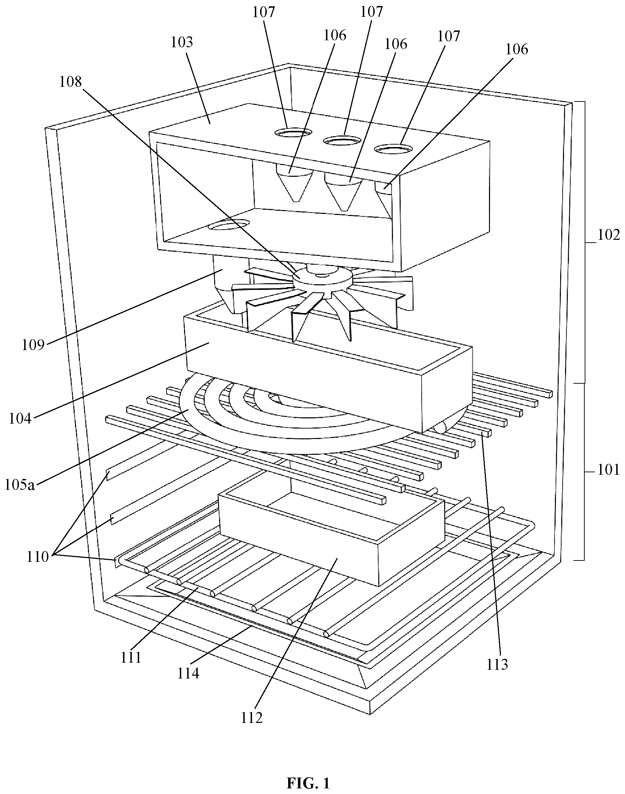

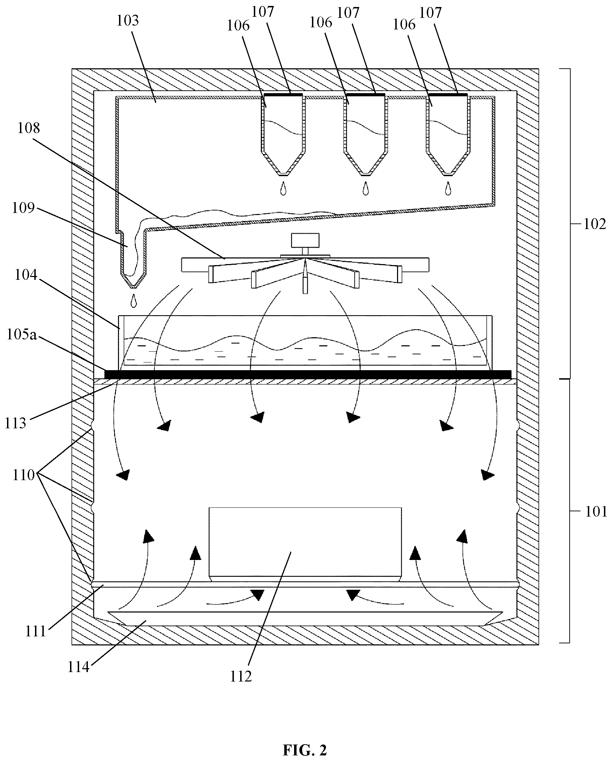

**FIG. 1** and **FIG. 2** illustrate a preferred embodiment of a multifunctional cooking apparatus, more particularly, a multifunctional cooking apparatus with superheating steam capabilities. The apparatus comprises a main body, also known as a housing, having a lower compartment **101** and an upper compartment **102,** in which each compartment **101, 102** is designated to house one or more components therewithin. Preferably, the main body may be constructed as a unibody container with a partition **113** separating the upper compartment **102** from the lower compartment **101.** The main body may be made from a metallic material for its interior, such as stainless steel or aluminium, while its exterior is preferably constructed with a heat-resistant material such as plastic or stainless steel as well. However, any suitable material capable of withstanding high temperatures and pressures required for cooking food products is contemplated herein.

Preferably, the lower compartment **101** includes a chamber for receiving food products therein, which include, but are not limited to, meats, fish, poultry, bread, rice, grains, pasta, vegetables, fruits, and dairy products, among others. Besides that, the chamber may be fabricated with a plurality of grooves **110** on its side walls, such that items including cooking racks **111** may be inserted into said grooves **110.** Additional cooking vessels **112** such as cooking pans, pots, bowls, plates, or the likes may also be inserted into the chamber and placed onto said cooking racks **111** for cooking thereafter. Further, a removable tray **114** may also be arranged below the cooking racks **111** to collect any residue from cooking the food product and prevent the lower compartment **101** from becoming dirty. Further, the lower compartment **101** may be equipped with a panel that is hinged to said lower compartment **101** and provide a seal for the chamber when closed. The panel may be incorporated with a transparent viewing window that allows users to visually check on the food products during operation.

In a preferred embodiment, the upper compartment **102** of the main body may comprise a dispensing module **103,** a conductive receptacle **104,** a heating element **105a, 105b,** and a circulation system, all of which operatively communicate with one another during operation. Additionally, the apparatus may comprise a controller module integrated into the upper compartment, such that the controller module may be incorporated with a processor which is configured to control all operations of the apparatus. The controller module may further include an interface positioned at the exterior of main body of the apparatus, in which said interface may include at least one input associated with selecting various modes of operation of the apparatus and for activating the heating element of said apparatus. The input may also include a light or other indicator to show that the respective input has been selected. Additionally, the interface may include a display separate from and associated with the input. Further, operations of the input may be described in more detail herein.

In one embodiment, the input of the interface may include an on/off button which allows the user to activate or deactivate the apparatus. The input may also be operable to enter a time and a temperature associated with various modes of operation of the apparatus in a desired manual mode. The time and the temperature may be entered via the same input, or a separate input as used to select either mode of operations. As such, the interface may display the remaining time, as well as temperature and any other parameters associated with said mode of operations.

In addition, the controller module may further comprise one or more sensors for monitoring one or more parameters of the apparatus. By way of example, one sensor may be used to monitor whether the panel of the lower compartment 101 is in a closed configuration. Besides that, the sensors may be also used to monitor a temperature within the chamber, or the sensor associated with the dispensing module 103 may be used to monitor its content level, subsequently triggering a prompt on the interface if the content level is below a predetermined minimum level.

As previously mentioned, the apparatus can perform various modes of operations, which includes a wet cooking mode, such as steaming, and a dry cooking mode, which is air frying. To perform a mode of operation that includes a combination of multiple types of cooking modes, the food product need not be removed from the chamber as the apparatus may cycle between a first mode, such as a steaming mode, and a second mode, such as an air frying mode, for example, and vice versa. The functionality of the interface of the controller module and inputs from the user may vary in response to the differing modes of operation. To achieve the various modes of operation, the apparatus utilizes high-efficiency heat convection, particularly in a confined space, to ensure that three heat transfer characteristics are optimized for maximum efficiency. In this context, the three heat transfer characteristics include conduction, convection, radiation, or a combination thereof, wherein heat transfer via conduction requires direct body contact between the heating element **105a, 105b** and the food products. Heat transfer via convection is done by means of the circulation system, particularly the fan assembly **108,** where performance of the heat transfer is maximized by the temperature of the heat being generated by the heating element **105a, 105b,** and contact area or surface area of the food products being cooked therein. Additionally, any radiated heat produced from the resistive heating element **105a** is confined within the chamber of the apparatus, thus minimizing heat leakage as well.

In an aspect of the present invention, the dispensing module **103** may be a container that conforms to a shape of the interior of the main body, and may be rectangular in shape with a downwards slope on one side towards one end along its longitudinal axis. Preferably, the dispensing module **103** further comprises a fluid conduit **109** integrated at the end of the downwards slope, such that the fluid conduit **109** extends downwards towards the conductive receptacle **104.** The fluid conduit **109** may be incorporated with either a pinched tip or an aperture which creates a small and narrow opening, in which surface tension of flavour enhancing liquids being dispensed may cause said liquids to form small droplets that detach from the tip due to gravity. This offers a controlled and consistent drop size of the flavour enhancing liquids while being dispensed into the conductive receptacle **104.** Optionally, the fluid conduit **109** may be incorporated with a pump and a valve, wherein the pump and the valve are operatively controlled by the controller module. The pump and the valve may then be activated upon determining the mode of operation to selectively control the amount of flavour enhancing liquids to be dispensed into the conductive receptacle **104** accordingly.

In a preferred embodiment, the dispensing module **103** may comprise of a plurality of flavour enhancing liquid dispensers **106** which are configured for controlled egress or dispense of the flavour enhancing liquids onto the conductive receptacle **104.** The flavour enhancing liquid dispensers **106** may be cylindrical tubes having an inlet **107** and an outlet for filling one or more types of flavour enhancing liquids and for dispensing said flavour enhancing liquids thereafter respectively. The dispensing module **103** may further include a cover disposed on its top portion, wherein the cover acts as a secondary protection that prevents external impurities from entering both the dispensing module **103** and the flavour enhancing liquid dispensers **106.** Preferably, both the dispensing module **103** and the flavour enhancing liquid dispensers **106** are removable from the main body of the apparatus for ease of maintenance thereby.

In this embodiment, the flavour enhancing liquid dispensers **106** may also be configured to selectively dispense any of the flavour enhancing liquid via the controller module. Preferably, the flavour enhancing liquids may include water, sauces, broth, juices, or the likes. In this context, the user may interact with the interface of the controller module to select any one or a combination of the flavour enhancing liquids to be dispensed and a predetermined amount of said flavour enhancing liquids to be dispensed as well. This enables a mixture of the flavour enhancing liquids to be dispensed accordingly with a control of its concentration, flavour profile or the likes.

In a preferred embodiment, the conductive receptacle **104** may be fabricated from a heat-conductive material, preferably metal that has high heat conductivity and durability for use during prolonged periods, such as stainless steel or aluminium alloy. Preferably, the conductive receptacle **104** may be configured in a rectangular shape and said conductive receptacle **104** may be configured to receive the flavour enhancing liquids that are dispensed by the flavour enhancing liquid dispensers 106 within the dispensing module **103** for conversion into steam for steam cooking thereafter. Further, the conductive receptacle **104** may be removable from the apparatus for cleaning and replacement with another conductive receptacle **104** of the same size or of a different size, depending on user requirement.

Referring to **FIG. 1****,** the conductive receptacle **104** may be preferably disposed above the heating element **105a,** such that heat may be transferred from said heating element **105a** directly onto the conductive receptacle **104,** thereby heating up the flavour enhancing liquids to produce steam. Preferably, the apparatus may utilize a type of resistive heating element **105a** which may be disposed at the upper compartment **102** and may be made from a material that conducts electricity very well but resists its flow to some extent, such that the resistance causes heat to be created through a process called Joule heating. Instead of cooking the food directly, the heat produced by the heating element **105a** heats up air within the apparatus as well as the conductive receptacle **104** through heat conduction. The steam produced as a result of heating the conductive receptacle **104** may be infused with the flavour of the selected flavour enhancing liquids, which may then be transferred to the food being cooked in the chamber in the lower compartment **101.** Preferably, the resistive heating element **105a** is operatively connected to the controller module, in which the temperature of the resistive heating element **105a** is controlled to prevent any instances of burning of the food product therein. In one embodiment, the resistive heating element **105a** may have a diameter substantially equal to or smaller than a width of the interior of the main body.

In the illustrated embodiment, the circulation system may be configured to circulate the steam produced from the conductive receptacle **104** into the lower compartment **101,** in which said circulation system may include a fan assembly **108** disposed in the upper compartment **102.** Preferably, the fan assembly 108 may be a centrifugal fan that is arranged in a position between the dispensing module **103** and the conductive receptacle **104.** This placement allows the fan assembly **108** to efficiently draw in air, preferably through vents that may be located at a back portion of the main body. As the air is drawn into the apparatus, the air passes over the heating element **105a** and is heated prior to circulating to the chamber in the lower compartment **101,** subsequently facilitating in cooking the food products therein.

In a preferred embodiment, the fan assembly **108** may be powered by a motor, preferably a direct current (DC) motor, and may be operable at plurality of rotational speeds, which may vary depending on the mode of operation. For example, the speed of the fan assembly **108** during operation in an air fryer mode may be different than the speed of the fan assembly **108** during operation in a steam cooking mode. Preferably, the speed of the fan assembly **108** may be controlled by the controller module via the interface and may be manually or automatically adjusted depending on the selected mode of operation. By way of example, the interface may display an optimum speed of the fan assembly **108** for the selected mode of operation, but users may adjust accordingly based on their requirement.

In a preferred embodiment, as disclosed earlier, the circulation system facilitates a flow of the produced steam from the upper compartment **102** into the lower compartment **101.** By way of example, the flow of the steam is represented by directional arrows in **FIG. 2****,** **FIG. 4****,** and **FIG. 6** and **FIG. 8** respectively. Preferably, the fan assembly **108** pulls in any cool air within the chamber of either or both the lower compartment **101** and the upper compartment, such that the cool air subsequently heated by the resistive heating element **105a,** which then gets forced downwards by the fan assembly **108** towards the lower compartment **101.** As the hot air and steam circulate through the chamber in the manner described above, the hot air and steam come into contact with the food product, absorb moisture from the surface of said food product and transfer the heat for cooking. The steam infused with the flavour of the mixture of the flavour enhancing liquids further cook the food product from within and prevent said food from being dry and burnt, keeping the food product moist and preserving its integrity. Residual hot air may then rise back up to the resistive heating element **105a** to complete a circulation loop of the airflow. In operation, the fan assembly **108** continuously pulls in fresh air, reheats it, and pushes it down for consistent cooking. By way of example, the resistive heating element **105a** may be configured to heat up the steam and air beyond its set temperature, causing the steam to form superheated steam that may be circulated throughout the chamber to cook the food product therein faster while maintaining its integrity.

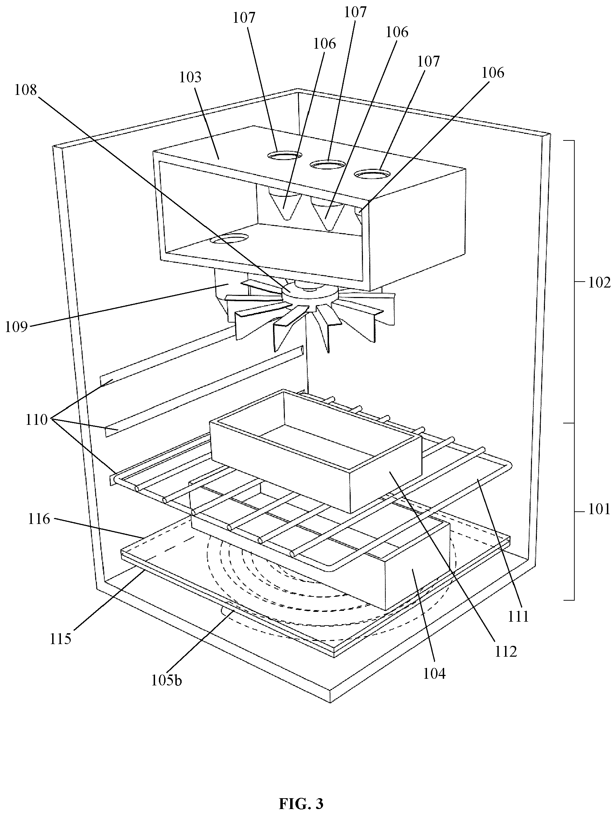

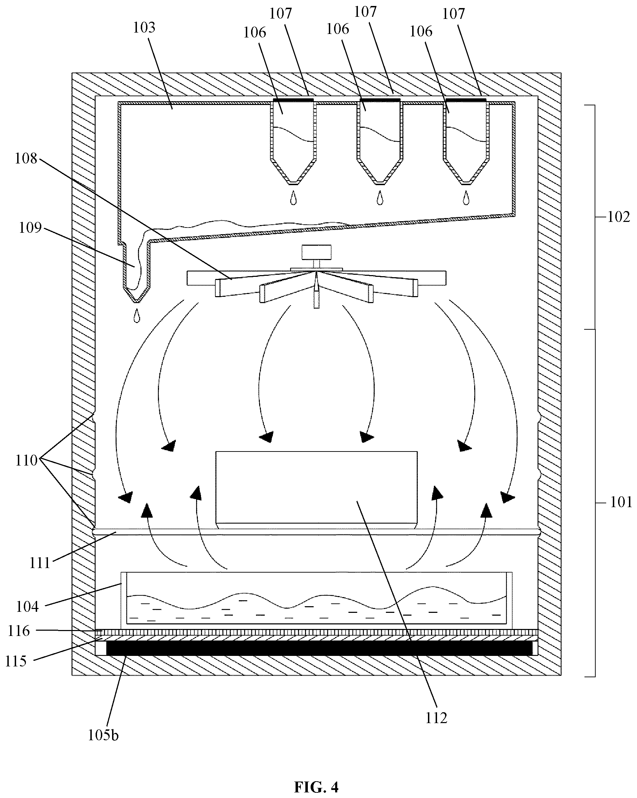

In an exemplary embodiment with reference to **FIG.** 3 and **FIG. 4****,** the apparatus employs an induction heating element **105b** that is preferably arranged at the bottom portion of the lower compartment **101.** In this embodiment, the conductive receptacle **104** is also disposed above the induction heating element **105b** within the lower compartment **101.** As illustrated in **FIG.** 3 and **FIG. 4****,** the partition **113** may be replaced with a base plate **115** that may be made from glass ceramic that primarily serves as a durable, heat-resistant platform to hold the conductive receptacle **104.** Disposed above the base plate **115** is an inductive plate **116** that may be made from a ferromagnetic material that is compatible with induction cooking which includes cast iron, carbon steel, stainless steel with a magnetic-type base, or the likes. The inductive plate **116** may be configured to maximize heat distribution from the induction heating element **105b** to the conductive receptacle **104** by covering the length and width of said induction heating element **105b.** The heat produced from areas on the inductive plate **116** uncovered by the conductive receptacle **104** may also further heat the steam produced from said conductive receptacle **104** to cook the food products faster therein. Alternatively, the conductive receptacle **104** may also be made from ferromagnetic material to allow for faster heat generation upon interaction between the inductive plate **116** and said conductive receptacle **104.** The racks **111** along with the cooking vessels **112** may then be arranged in a position between the induction heating element **105b,** the conductive receptacle **104,** and the fan assembly **108** of the circulation system. Preferably, the dispensing module **103** may still be disposed at the top portion of the upper compartment **102,** and operates in the same manner as disclosed earlier. However, the dispensing module **103** may be equipped with a water guide that extends from the conduit **109** along the walls of the main body of the apparatus from the upper compartment **102** to the lower compartment **101.** This configuration facilitates the dispensing of the flavour enhancing liquids from said dispensing module **103** to the conductive receptacle **104** while preventing the mixture of flavour enhancing liquids to be dispersed by the flow of air generated by the circulation system.

In this embodiment, the induction heating element **105b** may be incorporated with one or more electronic components that allows alternating current (AC) to flow therethrough, generating a rapidly alternating magnetic field which extends upwards through the base plate **115** and interact with a bottom of the conductive receptacle **104,** subsequently inducing swirling electrical currents within the conductive receptacle **104** thereafter, in which these currents are known as eddy currents. Heat is thereby generated as the eddy currents encounter resistance as said currents flow through the material of the conductive receptacle **104.** Further, efficiency of converting electrical energy into thermal energy is substantially high through the application of eddy currents, resulting in a high rate of heat generation albeit in a controlled manner, in addition to minimal power loss in conversion between electrical energy and the alternating magnetic field that was generated. As described above, the mixture of the flavour enhancing liquids may then be vaporized into steam at a boiling temperature of 100°C infused with the flavour of said flavour enhancing liquids and flow from the bottom of the conductive receptacle **104** as indicated by the directional arrows in **FIG. 4****.** The fan assembly **108** further circulates the hot air and steam in the same manner as described above.

In a further embodiment, the apparatus may be equipped with a self-cleaning operation, in which the dispensing module **103** may only dispense water into the conductive receptacle **104,** and subsequently heated by the heating element **105a, 105b** to become superheated steam with a temperature ranging between 100°C and 300°C, that can facilitate cleaning and removal of dirt from both the lower compartment **101** and the upper compartment **102.** Further, the self-cleaning operation may also be used to clean and sterilize items such as the cooking vessels **112,** heat-resistant utensils, or the likes.

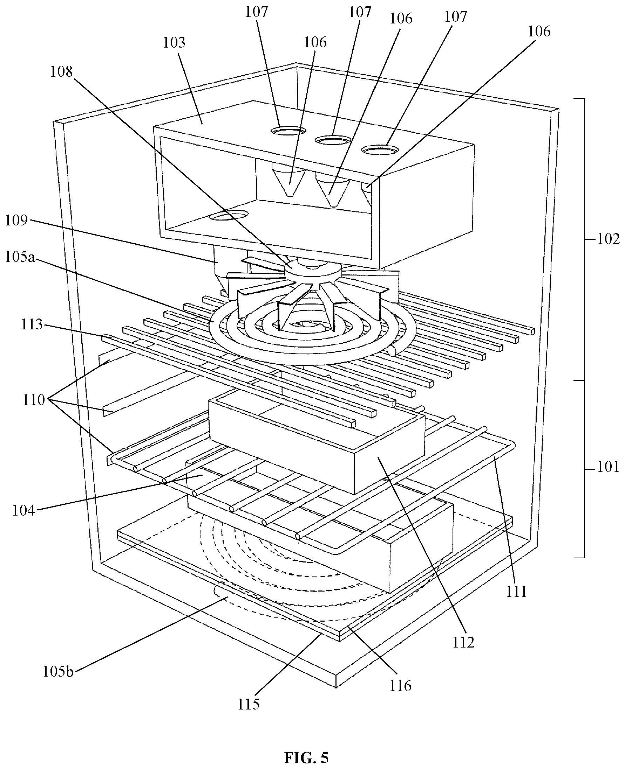

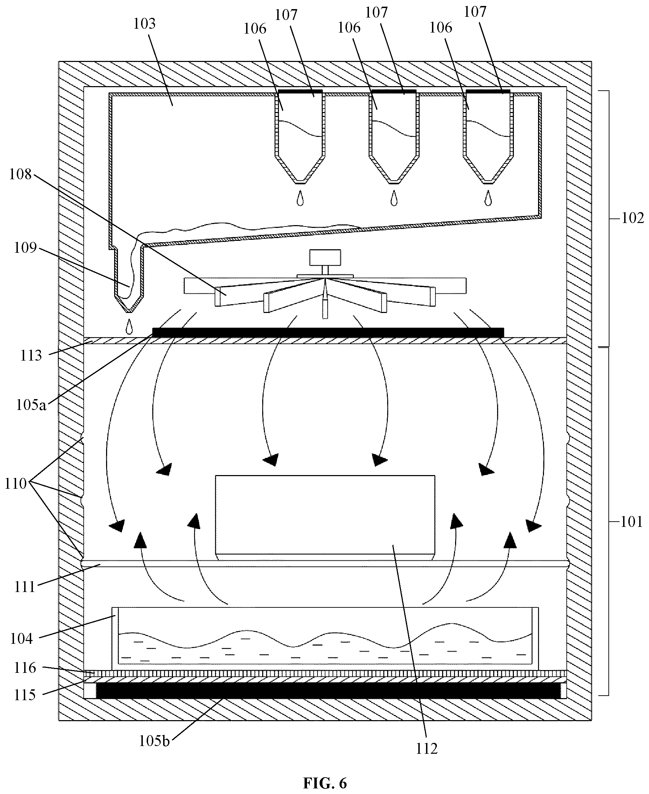

**FIG. 5** and **FIG. 6** illustrates further exemplary embodiments of the multifunctional cooking apparatus, in which the heating element **105a, 105b** includes both the resistive heating element **105a** and the induction heating element **105b.** Similarly to **FIG. 1** and **FIG. 2****,** the resistive heating element **105a** may be disposed in the upper compartment **102,** while the induction heating element **105b** may be disposed in the lower compartment **101,** as illustrated in **FIG. 3** and **FIG. 4****.** In this embodiment, the apparatus functions similarly with the previously mentioned embodiments, with the dispensing module **103** dispensing the flavour enhancing liquids into the conductive receptacle, preferably using the water guide as mentioned above for the embodiment illustrated in **FIG. 3** and **FIG. 4****.** In this particular embodiment, both the resistive heating element **105a** and the induction heating element **105b** may be utilized independently or concurrently depending on the various mode of operation as determined by the user.

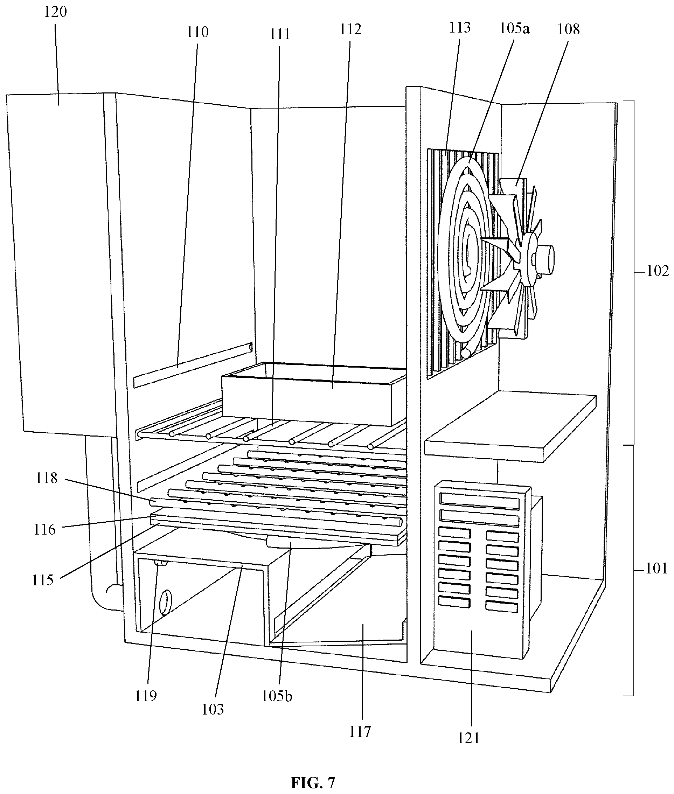

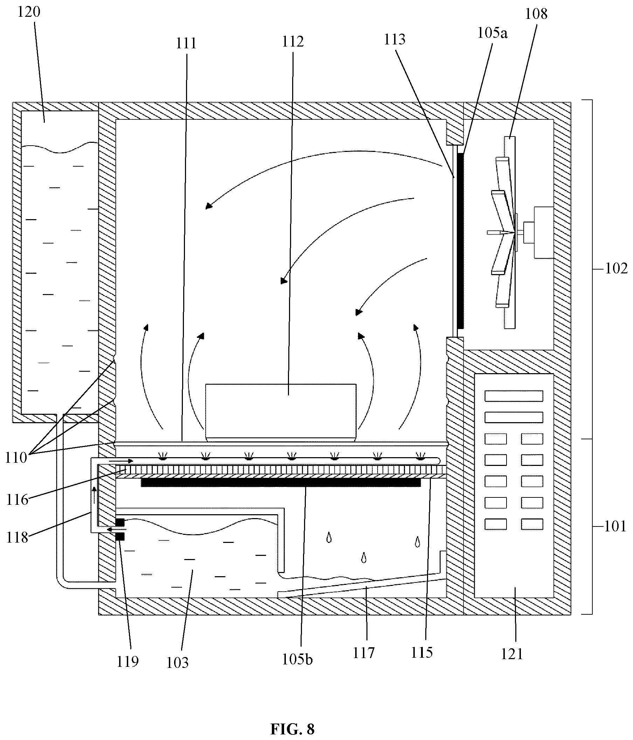

**FIG. 7** and **FIG. 8** illustrates yet further embodiments of the multifunctional cooking apparatus, in which the apparatus utilizes both the resistive heating element **105a** and the induction heating element **105b,** similarly to the embodiment as illustrated in **FIG. 5** and **FIG. 6****.** However, the resistive heating element **105a** may be disposed in a compartment located at a lateral side relative to the main body of the apparatus. The fan assembly **108** may also be disposed within the same compartment as the resistive heating element **105a** to facilitate the flow of hot air within the chamber. Besides that, the controller module **121** may be disposed in another compartment adjacent to the compartment having the resistive heating element **105a** and the fan assembly **108.** The chamber is located between the lower compartment **101** and the upper compartment **102,** in which said chamber can be accessed via a door at a front portion of the main body. In this embodiment, the lower compartment houses the induction heating element **105b,** the base plate **115,** the inductive plate **116,** the dispensing module **103,** and a waste water tray **117.**

As illustrated in **FIG. 7** and **FIG. 8****,** the dispensing module **103** may be equipped with one or more pipes **118** that extends to the inductive plate **116** therethrough. The pipes **118** may be made from a ferromagnetic material such as iron, to be compatible with induction cooking. Preferably, the dispensing module **103** may also be incorporated with a micro pump **119** that pumps the fluid through the pipes **118,** such that the fluid may be heated to a temperature of 100°C and vaporized into steam upon travelling downstream of the pipes **118.** The steam may then be used for, by way of example but is not limited to, steaming the food products, frothing milk for coffee mixtures, or disinfection of utensils therein. Optionally, the eddy currents generated from the swirling electrical currents flowing through the induction heating element **105b** may be amplified by a magnetic field generator disposed adjacent to said induction heating element **105b.** The amplified eddy currents may then further generate heat within the inductive plate **116** and the pipes **118,** causing the vaporized vapor to be further heated into superheated steam at a temperature of substantially 300°C, with said superheated steam traversing downstream of the pipes **118** into the chamber to cook the food products or for self-cleaning purposes and also disinfection of utensils therein. Further, excess water or moisture formed during the steaming of the food products within the chamber may be collected in the waste water tray **117,** and subsequently recycled into the dispensing module **103** to be reused as superheated steam again. Optionally, a fluid tank **120** may be disposed at an opposite side of the exterior of the main body, functioning as a reservoir for supplying fluid to the dispensing module **103** when fluid supply within said dispensing module **103** is running low. The fluid tank **120** may also act as a reservoir or hot water tank for hot water as the fluid in the dispensing module **103** is heated up from room temperature of substantially 25°C to 100°C by the induction heating element **105b.** Advantageously, there may be minimal wastage and replacement of fluid within the dispensing module **103** may be less frequent.

Certain exemplary implementations have been described to provide an overall understanding of the principles of the structure, function, manufacture, and use of the systems, devices, and methods disclosed herein. One or more examples of these implementations have been illustrated in the accompanying drawings. Those skilled in the art will understand that the systems, devices, and methods specifically described herein and illustrated in the accompanying drawings are non-limiting exemplary implementations and that the scope of the present invention is defined solely by the claims. The features illustrated or described in connection with one exemplary implementation may be combined with the features of other implementations. Such modifications and variations are intended to be included within the scope of the present invention. Further, in the present disclosure, like-named components of the implementations generally have similar features, and thus within a particular implementation, each feature of each like-named component is not necessarily fully elaborated upon.

The present disclosure includes as contained in the appended claims, as well as that of the foregoing description. Although this invention has been described in its preferred form with a degree of particularly, it is understood that the present disclosure of the preferred form has been made only by way of example and that numerous changes in the details of construction and the combination and arrangements of parts may be resorted to without departing from the scope of the invention.

## Claims

1. A multifunctional cooking apparatus comprising:
a main body having a lower compartment (101) with a chamber for receiving food products therein; and
an upper compartment (102) comprising a dispensing module (103) for containing liquid to produce steam;
a conductive receptacle (104) for receiving liquid from the dispensing module (103) for conversion into steam for steam cooking;
a heating element (105a, 105b) for heating the conductive receptacle (104) for boiling the received liquid to produce steam thereon; and
a circulation system in communication with the lower compartment (101);
wherein the dispensing module (103) comprises a plurality of flavour enhancing liquid dispensers (106) for controlled egress of the flavour enhancing liquid onto the conductive receptacle (104), such that the steam produced from the conductive receptacle (104) is subsequently circulated through the circulation system into the chamber in the lower compartment (101).

2. The apparatus according to claim 1, wherein the dispensing module (103) is configured to selectively dispense any one of the flavour enhancing liquid dispensers (106).

3. The apparatus according to claim 1 or 2, wherein the dispensing module (103) includes an inlet (107) for filling up any one of the flavour enhancing liquid dispensers (106).

4. The apparatus according to any one of the preceding claims, wherein the heating element (105) is arranged at any position in either or both the upper compartment (102) or in the lower compartment (101).

5. The apparatus according to claim 4, wherein the heating element (105a, 105b) includes a resistive heating element (105a) and an induction heating element (105b).

6. The apparatus according to any one of the preceding claims, wherein the circulation system includes a fan assembly (108).

7. The apparatus according to claim 6, wherein the fan assembly (108) is arranged in a position between the dispensing module (103) and the conductive receptacle (104).

8. The apparatus according to claim 6 or 7, wherein the fan assembly (108) facilitates the flow of the steam produced in the conductive receptacle (104) into the chamber of the lower compartment (101) thereafter.

9. The apparatus according to any one of the preceding claims, further comprises a controller module integrated into the upper compartment (102), in which the controller module is configured to control all operations of the apparatus.

10. The apparatus according to any one of the preceding claims, wherein the dispensing module (103) and the conductive receptacle (104) are removable from either or both the lower compartment (101) and the upper compartment (102).
